# EUROPEAN PATENT APPLICATION

(11) **EP 4 541 987 A1**
(43) Date of publication of application: **23.04.2025**
(21) Application number: 24206618.1
(22) Date of filing: 15.10.2024
(51) Int. Cl.: E04H 4/16

(54) **POOL CLEANING DEVICE**

(30) Priority: 16.10.2023 CN 202322776002 U
(71) Applicant: Bestway Inflatables & Material Corp., Shanghai 201812 (CN)
(72) Inventor: ZENG, Xianglin, Shanghai 201812 (CN)
(74) Representative: Zermani Biondi Orsi, Umberto

(57) **Abstract**

A pool cleaning device includes a driving unit that drives the pool cleaning device and a transmission unit including a gear assembly and a reversing assembly. The transmission unit is driven by the driving unit to switch between a first state and a second state. In the first state, the gear assembly is linked with the reversing assembly and is in a first position, and the pool cleaning device moves in a first direction in response to the first position. In the second state, the gear assembly is linked with the reversing assembly and switched to a second position, and the pool cleaning device moves in a second direction opposite to the first direction in response to the second position.

## Description

### CROSS-REFERENCE TO RELATED APPLICATIONS

This application claims the benefit of and priority to Chinese Utility Model No. 202322776002.7, filed October 16, 2023.

### TECHNICAL FIELD

The present disclosure relates to the technical field of pool cleaning devices, and more particularly to a pool cleaning device suitable for moving across the bottom of a pool to remove debris and other contaminants from the pool.

### BACKGROUND

A pool cleaning device is typically used for cleaning the bottom of a pool, such as a swimming pool. When the pool cleaning device is in use, a power assembly causes wheels to run so as to clean dirt or other debris at the bottom of the pool. In traditional pool cleaning devices, a driving assembly in the form of an impeller is arranged inside the pool cleaning device, and a gear assembly driven by the driving assembly is provided to make the wheels run. However, the existing gear assembly is complex in structure and unstable in gear reversing, such that the wheels are prone to spinning in the same place, resulting in a reduced cleaning efficiency.

### SUMMARY

It is an objective of the present disclosure is to provide an improved pool cleaning device to remedy the deficiencies mentioned above. The pool cleaning device described herein may automatically and reliably realize reversing of the wheels of the pool cleaning device without causing the wheels to spin in the same place, so that the bottom of a pool can be efficiently cleaned in all directions.

To this end, according to an aspect of the present disclosure, a pool cleaning device is provided, including: a driving unit configured to drive the pool cleaning device; and a transmission unit including a gear assembly and a reversing assembly, the transmission unit being configured to be driven by the driving unit to switch between a first state (or configuration) and a second state (or configuration); wherein in the first state, the gear assembly is in a first position in which the pool cleaning device moves in a first direction in response to the first position; and in the second state, the gear assembly is switched to a second positionin which the pool cleaning device moves in a second direction opposite to the first direction.

Preferably, in both the first and second state (or configuration), the gear assembly is linked to the reversing assembly.

It should be further appreciated that, in the embodiments described herein, the present disclosure may further include any one or more of the following optional forms.

In some optional forms, the gear assembly includes a first gear and a second gear that are coaxially arranged, the first gear engaging with a fourth gear via a third gear, the second gear engaging with a fifth gear, and the fourth gear and the fifth gear being coaxially arranged such that the pool cleaning device moves in the first direction and the second direction; wherein the gear assembly further includes an intermediate gear capable of moving between the first position and the second position to drive the first gear and the second gear.

In some optional forms, the intermediate gear is coaxially arranged between the first gear and the second gear, and includes first reversing teeth arranged toward the first gear, and second reversing teeth arranged toward the second gear, the first reversing teeth engaging with the first gear in the first position, and the second reversing teeth engaging with the second gear in the second position.

In some optional forms, the reversing assembly includes a reversing gear, a first reversing baffle and a second reversing baffle that are coaxially arranged, the reversing gear being rotated such that: the intermediate gear moves to be in the first position when the first reversing baffle engages with a first surface of the intermediate gear, and the intermediate gear moves to be in the second position when the second reversing baffle engages with a second surface of the intermediate gear opposite to the first surface.

In some optional forms, the reversing assembly includes a first reversing base plate and a second reversing base plate that are coaxially arranged and parallel to each other, the first reversing baffle being configured to extend from a periphery of the first reversing base plate and the second reversing baffle being configured to extend from a periphery of the second reversing base plate, such that the first reversing base plate and the second reversing base plate extend perpendicularly toward each other and are arranged in axial symmetry with respect to each other.

In some optional forms, the first reversing baffle and the second reversing baffle are each configured to include a guiding portion for guiding the intermediate gear and a retaining portion for retaining the intermediate gear.

In some optional forms, the gear assembly further includes a sixth gear engaging with the intermediate gear and a seventh gear engaging with the reversing gear, the sixth gear and the seventh gear being coaxially arranged.

In some optional forms, the driving unit includes an impeller and a driving housing for accommodating the impeller, the driving housing being provided with a water intake port and a water exhaust port which are respectively in fluid communication with a dirt suction port and an external connection port of the pool cleaning device.

In some optional forms, a filter chamber is arranged between the dirt suction port and the water intake port, and the filter chamber is provided with a first filter screen arranged adjacent to the dirt suction port.

In some optional forms, the filter chamber further includes a second filter screen arranged adjacent to the water intake port.

In some optional forms, the external connection port of the pool cleaning device is provided with an adapter to connect a water intake end of an external pump body, the adapter including a connecting sleeve, and the connecting sleeve being connected to the external connection port by a bearing, such that the connecting sleeve rotates relative to the external connection port.

In some optional forms, one end of the connecting sleeve is provided with a snap hook, the adapter further includes a connecting nut, the connecting nut being provided with a radially extending limiting portion, and rotation of the bearing is limited between the snap hook and the limiting portion.

In some optional forms, the connecting sleeve further includes a peripheral flange spaced apart from the snap hook, and rotation of the bearing is limited between the snap hook and the peripheral flange, and between the limiting portion and the peripheral flange.

In some optional forms, an inner wall of the external connection port is provided with a step, and rotation of the bearing is limited between the snap hook and the step, and between the limiting portion and the peripheral flange.

According to another embodiment of the disclosure, alternative or complimentary with the preceding ones, a pool cleaning device includes a driving unit configured to drive the pool cleaning device, a gear assembly configured to be driven by the driving unit, and a reversing assembly linked with the gear assembly. The gear assembly is switchable between a first position, in which the pool cleaning device moves in a first direction, and a second position, in which the pool cleaning device moves in a second direction opposite the first direction.

In some optional forms, the driving unit comprises an impeller and a driving housing for accommodating the impeller, the driving housing being provided with a water intake port and a water exhaust port which are in fluid communication with a dirt suction port and an external connection port of the pool cleaning device.

In some optional forms, a filter chamber is arranged between the dirt suction port and the water intake port, and the filter chamber is provided with a first filter screen arranged adjacent to the dirt suction port.

In some optional forms, an external connection port of the pool cleaning device is provided with an adapter to connect a water intake end of an external pump body, the adapter comprising a connecting sleeve, and the connecting sleeve being connected to the external connection port by a bearing, such that the connecting sleeve rotates relative to the external connection port.

According to yet another embodiment of the disclosure, alternative or complimentary with the preceding ones, a pool cleaning device, includes a driving unit configured to drive the pool cleaning device, a gear assembly, and a reversing assembly. The gear assembly comprises a first gear, a second gear coaxially arranged with the first gear, and an intermediate gear to drive the first gear and the second gear. The reversing assembly is linked with the gear assembly and includes a reversing gear, a first reversing baffle, and a second reversing baffle coaxially arranged with the first reversing baffle. The intermediate gear is translatable between a first position and a second position such that, in the first position, the first reversing baffle engages with a first surface of the intermediate gear, and, in the second position, the second reversing baffle engages with a second surface of the intermediate gear opposite to the first surface.

In some optional forms, the driving unit comprises an impeller and a driving housing for accommodating the impeller, the driving housing being provided with a water intake port and a water exhaust port which are in fluid communication with a dirt suction port and an external connection port of the pool cleaning device.

Preferably, the pool cleaning device may be automatically and reliably reversed by means of the gear assembly and the reversing assembly to avoid spinning in the same place, thereby improving the cleaning efficiency. In addition, by a simple structural design, the transmission unit having both the gear assembly and the reversing assembly may be convenient to operate, and low in cost, which also provides more possibilities for diversification of product modeling.

### BRIEF DESCRIPTION OF THE DRAWINGS

Other features and advantages of the present disclosure will be understood from the following embodiments described in detail herein and with reference to the accompanying drawings, in which each reference number represents the same or similar components.
FIG. 1 is a schematic diagram of a pool cleaning device, according to an embodiment of the present disclosure;
FIG. 2 is a schematic sectional view of the pool cleaning device of FIG. 1, and shows an adapter connected to an external connection port;
FIG. 3 is a schematic exploded view of the pool cleaning device of FIG. 2;
FIG. 4 is a schematic diagram of a driving unit and a transmission unit of the pool cleaning device of FIG. 1;
FIG. 5 is a schematic exploded view of the driving unit and the transmission unit of FIG. 4;
FIG. 6 is a schematic diagram of a gear assembly and a reversing assembly of the pool cleaning device of FIG. 1 in a first state;
FIG. 7 is a schematic diagram of the first state shown in FIG. 6;
FIG. 8 is a schematic diagram of the gear assembly and the reversing assembly of FIG. 1 in a second state;
FIG. 9 is a schematic diagram of the second state shown in FIG. 8;
FIG. 10 is a schematic diagram of the reversing assembly of FIG. 6;
FIG. 11 is a schematic diagram of the reversing assembly of FIG. 6; and
FIG. 12 is a schematic sectional view of the adapter of FIG. 2 connecting the external connection port to a pipe.

Elements in the figures are shown for simplicity and clarity and are not necessarily drawn to exact scale. It can be understood that these accompanying drawings are not only intended to explain and illustrate the present disclosure and description, but also contribute to the scope of the present disclosure.

### DETAILED DESCRIPTION

The implementation and application of embodiments of a pool cleaning device will be discussed in detail below. However, it will be understood that the embodiments discussed and illustrated herein illustratively describe various embodiments, implementation, and application of the present disclosure, and are not intended to limit the scope of the present disclosure.

As provided herein, the term "inner" refers to the direction toward the inside of an entire pool cleaning device, and "outer" refers to the direction toward the outside of the whole pool cleaning device.

As provided herein, the terms "first", "second", etc. cannot be used to limit the order and the number of assemblies unless otherwise stated.

As described herein, existing pool cleaning devices are complex in structure, and cannot stably achieve the reversing function. In particular, the wheels of traditional pool cleaning devices are prone to spinning in the same place, resulting in a reduced cleaning efficiency. The present disclosure aims to provide a pool cleaning device in which the structure is simple and reversing of a transmission unit can be automatically and reliably realized. Based on this concept, a pool cleaning device having a gear assembly and a reversing assembly is provided to switch the transmission unit between a first state (or configuration) and a second state (or configuration) by linkage of the gear assembly and the reversing assembly, so that the pool cleaning device moves in different directions in response to switching of the transmission unit between the first state and the second state.

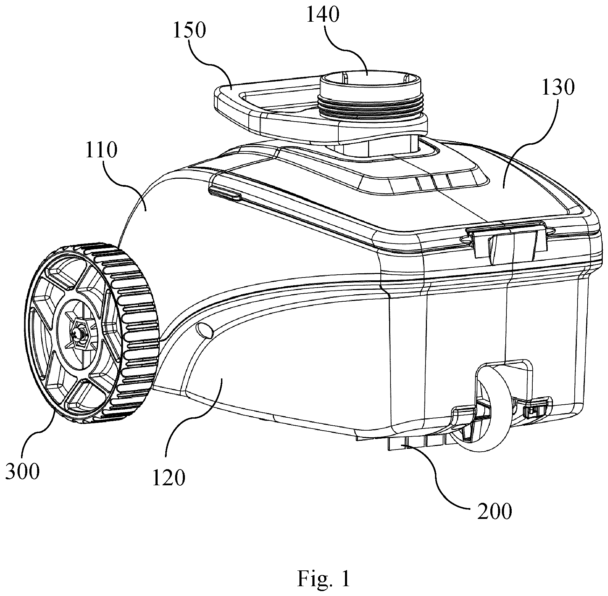

FIGS. 1 to 3 depict a pool cleaning device according to an embodiment. First, referring to FIG. 1, the pool cleaning device includes an upper housing 110 and a lower housing 120 attached to each other, and a filter chamber cover body 130 attached to the upper housing 110, thereby forming an external housing structure. In these embodiments, the upper housing 110 and/or the lower housing 120 may include a snap-fit mechanism having a plurality of tabs and a plurality of protrusions that interlock to secure the upper housing 110 to the lower housing 120. In other embodiments, the upper housing 110, the lower housing 120, and the filter chamber cover body 130 may be attached using screws or other similar mechanical fasteners. Furthermore, in other embodiments still, the upper housing 110, lower housing 120, and the filter chamber cover body 130 may be integrally formed to form the external housing structure, such that the external housing structure is a single, monolithic structure.

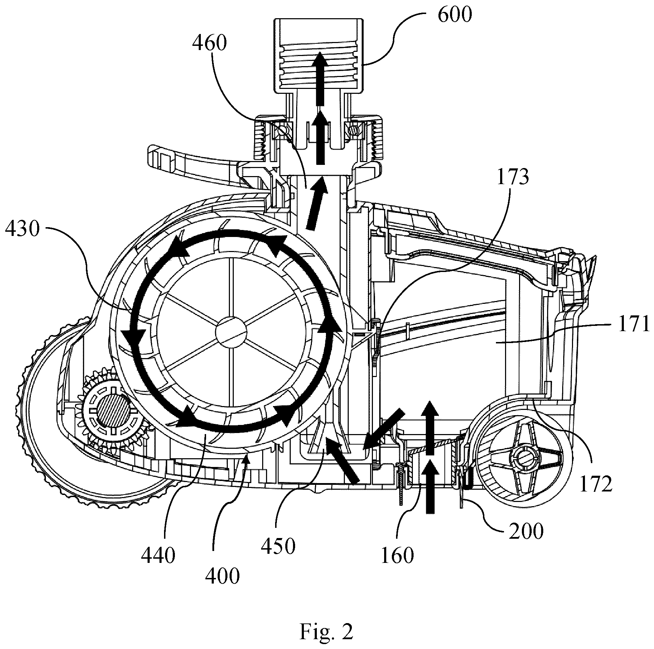

As further depicted in FIGS. 1 to 3, an external connection port 140 is arranged on top of the housing structure to connect a water intake end of an external pump body, such as by means of a corrugated pipe, and a handle 150 is optionally provided for a user to pick up. The housing structure may be provided with a plurality of wheels 300 (e.g., connected to and extending from the upper housing 110 and/or lower housing 120), a dirt suction port 160 at the bottom (e.g., as shown in FIG. 2), and one or more cleaning brushes 200 disposed adjacent to the dirt suction port 160, the cleaning brushes 200 being configured to facilitate scrubbing of the bottom of the pool in response to the movement of the pool cleaning device to enhance the cleaning performance of the pool cleaning device. In the embodiments described herein, when the pump body is activated, suction is generated inside the housing structure, so as to adsorb dirt at the bottom of the pool from the dirt suction port 160 for cleaning.

Referring now to FIGS. 2-5, the interior of the housing structure is depicted, in which the pool cleaning device includes a driving unit 400 and a transmission unit, and the driving unit 400 is configured to drive the pool cleaning device., In these embodiments, the driving unit 400 may include a driving housing having a first housing 410 and a second housing 420, and an impeller chamber 440 may be formed in the driving housing to accommodate an impeller 430. In addition, the driving housing may be provided with a water intake port 450 and a water exhaust port 460 which are respectively in fluid communication with the dirt suction port 160 and the external connection port 140 of the pool cleaning device. In these embodiments, the water intake port 450 may include a constricted and/or narrowed cross-section (e.g., such that the cross-section of the water intake port 450 decreases from an intake portion towards an opposite portion adjacent the water exhaust port 460) , such that the water intake port 450 generates a low pressure area adjacent the water intake port 450 in which the flow of fluid (e.g., from the bottom of the pool) is increased. It should be understood that, the low pressure, high velocity area generated adjacent the water intake port may create suction which may be used to draw debris and water from the bottom of the pool and into the water intake port 450.

Referring still to FIGs. 2-5, a filter chamber 171 may be arranged between the dirt suction port 160 and the water intake port 450. The filter chamber 171 may provided with a first filter screen 172 arranged adjacent to the dirt suction port 160 for filtering water flowing through the dirt suction port 160. As shown by the arrows, the filtered water enters the impeller chamber 440 through the water intake port 450 and is driven by rotation of the impeller 430 to flow out from the water exhaust port 460. In some embodiments, the filter chamber 171 further includes a second filter screen 173 arranged adjacent to the water intake port 450, which can further improve the filtering effect. In some cases, if the user neglects to mount the first filter screen 172, the second filter screen 173 can prevent dirt from entering the water intake port 450 and interfering with normal operation of the impeller 430.

In the embodiments described herein, it should be appreciated that the first filter screen 172 and/or the second filter screen 173 may include any filtering component configured to trap debris removed from the bottom of the pool while allowing for the flow of water through the filtering component. For example, the first filter screen 172 and/or second filter screen 173 may include a mesh filter (e.g., steel or plastic mesh), a cartridge filter (e.g., pleated polyester cartridge, etc.), a sponge or foam filter, a sediment filter, an activated carbon filter, or any other similar type of filtering component without departing from the scope of the present disclosure.

It should be understood that the contour of the external housing structure and the shape and layout of the internal space of the pool cleaning device can be designed in various ways according to actual needs, which are all included in the scope of the present disclosure. For example, in some embodiments, the external housing structure may be designed to provide enhanced hydrodynamic efficiency, such that the contour of the external housing structure includes a streamlined, smooth, and/or rounded shape that minimizes drag as the pool cleaning device moves through water. In these embodiments, the internal space within the external housing structure may be configured to maximize space utilization. For example, the various internal components (e.g., filter chamber 171, driving unit 400, etc.) may be positioned along a central axis of the pool cleaning device in order to provide a balanced weight distribution that enhances the stability of the pool cleaning device during operation.

In other embodiments, the external housing structure may include a compact, low-profile configuration that may allow for the pool cleaning device to maneuver within corners and beneath obstacles present in a pool, such as a pool ladder or pool steps. In these embodiments, the internal components of the pool cleaning device may be layered vertically within the external housing structure, such that the overall height of the pool cleaning device may be minimized while accommodating each of the internal components described hereinabove.

Furthermore, in some embodiments, the external housing structure may have an angled and/or wedge-shaped contour, such that a portion of the pool cleaning device it tilted downwards towards the bottom (e.g., bottom surface) of the pool. In these embodiments, the contour of the external housing structure may enhance the ability of the cleaning brushes 200 to make close contact with the bottom of the pool, thereby ensuring more effective removal of debris. In the embodiments described herein, the water intake port 450 and suction port 160 may positioned near the front of the external housing structure (e.g., adjacent the angled and/or wedge-shaped portion) to ensure that debris is captured after being dislodged by the cleaning brushes. Such a layout may prioritize debris capture efficiency and direct filtered water flow to a rear portion of the device.

As noted hereinabove should be appreciated that the embodiments described herein are illustrative in nature, and the external housing structure and internal components may have any arrangement without departing from the scope of the present disclosure. For example, in embodiments, the external housing structure and internal components may be further configured to provide ergonomic user handling, enhanced traction, modular component access, or any other similar configuration as may be determined based on the specifications of various users.

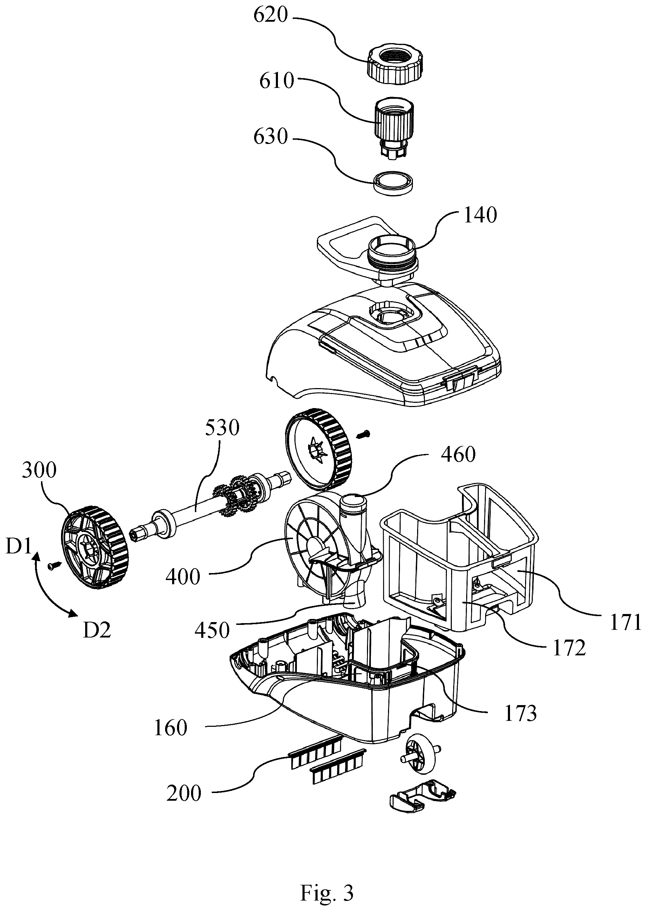

Referring still to FIGS. 2-5, and as mentioned above, the pool cleaning device according to the present disclosure may be provided with a gear assembly and a reversing assembly, which together form the transmission unit which may be driven by the driving unit to switch between the first state and the second state. In these embodiments, when the transmission unit is in the first state, the gear assembly may be linked with the reversing assembly in a first position, such that the pool cleaning device may move in a first direction., For example, in these embodiments, when the transmission unit is in the first state, the wheels 300 may rotate in a first direction D1 (e.g., as shown in FIG. 3), such that the pool cleaning device moves in the first direction. When the transmission unit is in the second state, the gear assembly is linked with the reversing assembly and switched to a second position, such that the pool cleaning device may move in a second direction opposite to the first direction. For example, in these embodiments, when the transmission unit is in the second state, the wheels 300 may rotate in a second direction D2 (e.g., as shown in FIG. 3), such that the pool cleaning device moves in the second direction opposite the first direction. In this way, the wheels 300 rotate in different directions (e.g., the first direction D1 and the second direction D2) to drive the pool cleaning device to change the direction of movement, thus effectively realizing all-round cleaning of the pool while preventing the wheels 300 from spinning in the same place.

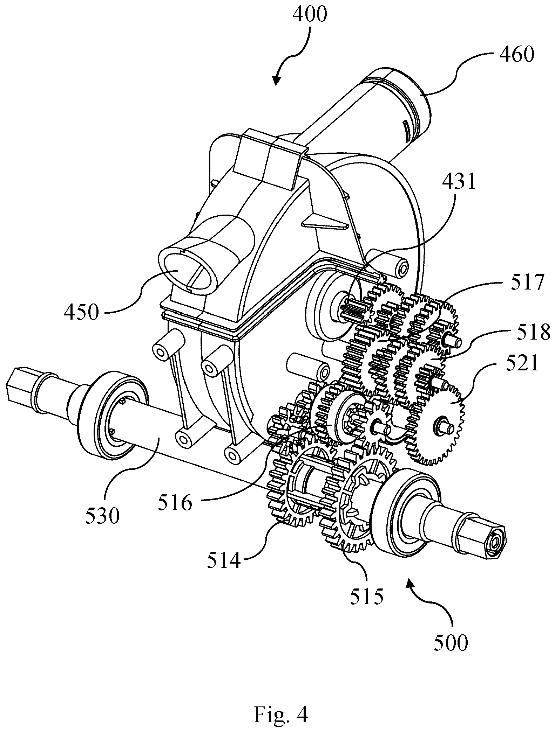

Turning now to FIGS. 4-11, the switching process of the transmission unit (e.g., from the first state to the second state) will be described in additional detail.

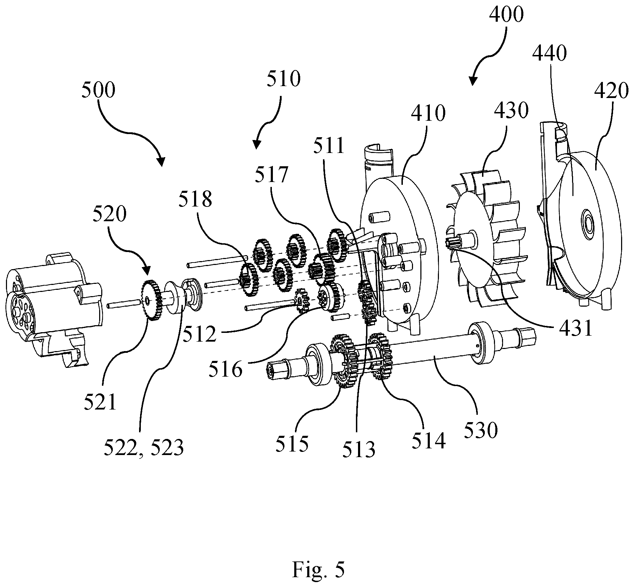

First, referring to FIGS. 4 and 5, the transmission unit 500 may include a gear assembly 510 and a reversing assembly 520, and the driving unit 400 may include an output shaft 431 disposed on an impeller 430 to drive the gear assembly 510. In the illustrated embodiment, the gear assembly 510 may include a first gear 511 and a second gear 512, with the first gear 511 and the second gear 512 being arranged coaxially. In these embodiments, the first gear 511 may engage with a fourth gear 514 via a third gear 513, and the second gear 512 may engage with a fifth gear 515. The fourth gear 514 and the fifth gear 515 may be coaxially arranged, for example, on an axle 530 that connect wheels 300, so as to drive the wheels 300 and the pool cleaning device to move in at least the first direction and the second direction.

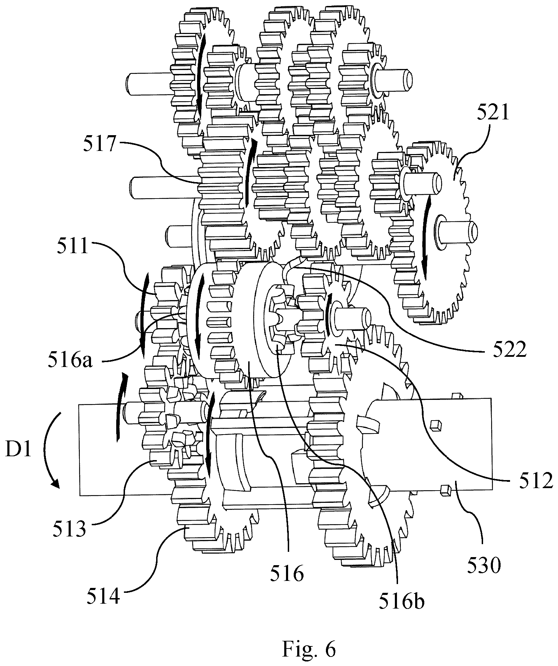

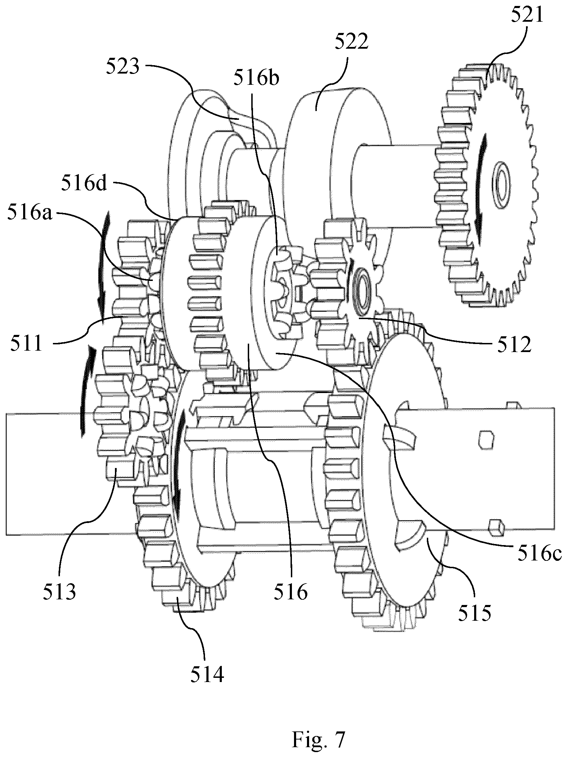

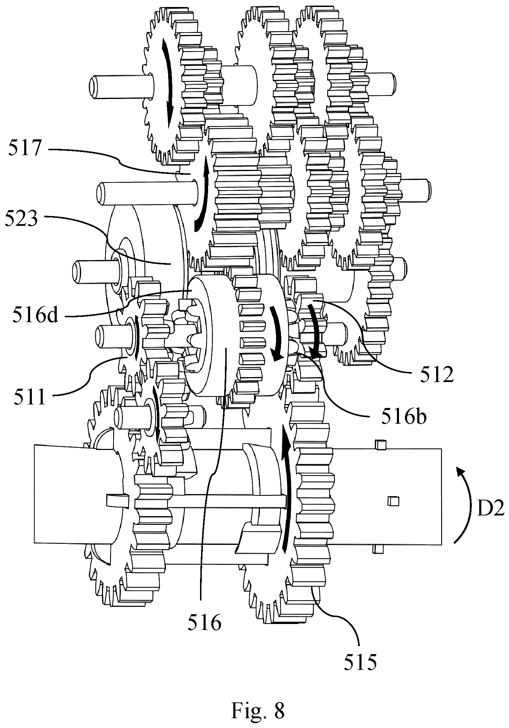

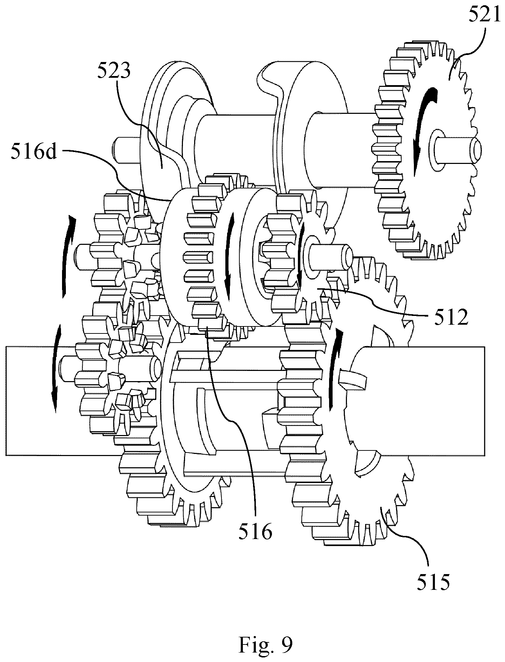

The gear assembly 510 may further include an intermediate gear 516. The intermediate gear 516 may move between a first intermediate gear position and a second intermediate gear position to drive the first gear 511 and the second gear 512, and the first gear 511 and the second gear 512 may, in turn, drive the fourth gear 514 and the fifth gear 515 to rotate in different (e.g., opposite) directions. In some embodiments, as shown in FIG. 6, the intermediate gear 516 may be coaxially arranged between the first gear 511 and the second gear 512, and may include first reversing teeth 516a arranged toward the first gear 511, and second reversing teeth 516b arranged toward the second gear 512. In the first intermediate gear position, the first reversing teeth 516a may engage the first gear 511 to drive the first gear 511, which may in turn cause the third gear 513 and the fourth gear 514 to rotate in the first direction D1, as shown in FIGS. 6 and 7. In the second intermediate gear position, the second reversing teeth 516b may engage with the second gear 512 to drive the second gear 512 and, in turn, cause the fifth gear 515 to rotate in the second direction D2, as shown in FIGS. 8 and 9.

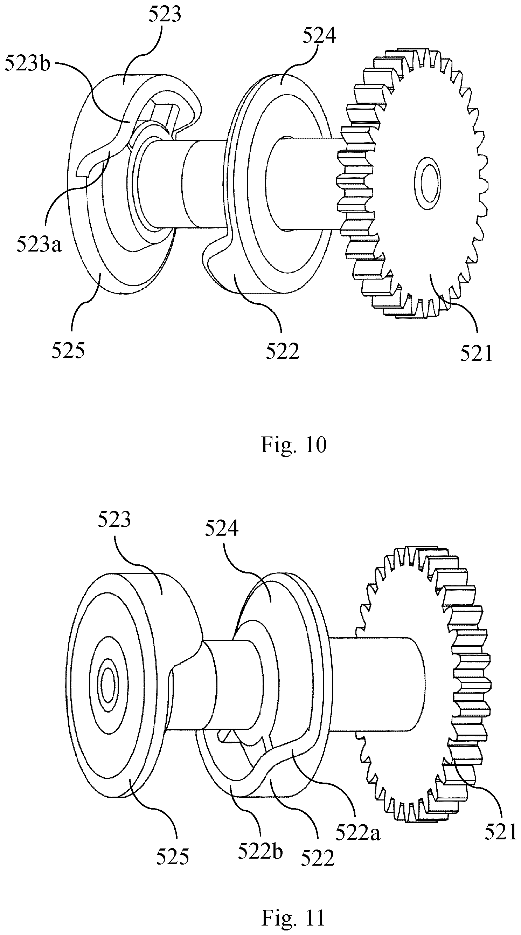

To enable movement of the intermediate gear 516 between the first intermediate gear position and the second intermediate gear position, in some embodiments, the reversing assembly 520 may include a reversing gear 521, a first reversing baffle 522 and a second reversing baffle 523, with the first reversing baffle 522 and the second reversing baffle 523 being coaxially arranged. In these embodiments, the reversing gear 521 may be rotated such that the intermediate gear 516 moves to be in the first intermediate gear position when the first reversing baffle 522 engages with a first surface 516c of the intermediate gear 516, and the intermediate gear 516 moves to be in the second intermediate gear position when the second reversing baffle 523 engages with a second surface 516d of the intermediate gear 516 opposite to the first surface 516c. For example, according to the embodiment shown in FIGS. 10 and 11, the reversing assembly may include a first reversing base plate 524 and a second reversing base plate 525 which are coaxially arranged and parallel to each other, while the first reversing baffle 522 and the second reversing baffle 523 may be configured to extend perpendicularly toward each other from part of peripheries of the first reversing base plate 524 and the second reversing base plate 525. More particularly, in these embodiments, the first reversing baffle 522 may extend from a first periphery of the first reversing base plate 524 and the second reversing baffle 523 may extend from a second periphery of the second reversing base plate 525, such that the first baffle 522 and the second baffle 525 extend perpendicularly toward each other. Furthermore, in these embodiments, and as depicted in FIGS. 10 and 11, it should be appreciated that the first reversing baffle 522 and the second reversing baffle 523 may be and be arranged in axial symmetry with respect to each other. In other words, the first reversing base plate 524 and the second reversing base plate 525 may rotate synchronously when the reversing gear 521 rotates, which in turn may enable the first reversing baffle 522 and the second reversing baffle 523 that are axially symmetrical to drive the intermediate gear 516, in order to cause the intermediate gear 516 to move between the first intermediate gear position and the second intermediate gear position.

In some embodiments (e.g., as depicted in FIG. 5), it should be further appreciated that the gear assembly 510 described herein may further include a sixth gear 517 that engages with the intermediate gear 516 and a seventh gear 518 that engages with the reversing gear 521, with the sixth gear 517 and the seventh gear 518 being coaxially arranged to enable synchronous rotation of the intermediate gear 516 and the reversing gear 521.

In some embodiments, as shown in FIGS. 10 and 11, the first reversing baffle 522 and the second reversing baffle 523 may be configured to respectively include guiding portions, such as a first guiding portion 522a and a second guiding portion 523a, for guiding the intermediate gear 516, and retaining portions, such as a first retaining portion 522b and a second retaining portion 523b, for retaining the intermediate gear 516 in place. Specifically, in the illustrated embodiment, the first retaining portion 522b and the second retaining portion 523b are provided to be substantially parallel to the first reversing base plate 524 and the second reversing base plate 525. Furthermore, the first guiding portion 522a and the second guiding portion 523a may extend, for example, in an arc form from the first reversing base plate 524 and the second reversing base plate 525 to the first retaining portion 522b and the second retaining portion 523b.

When the transmission unit is in the first state, as shown in FIGS. 6 and 7, the reversing gear 521 may be driven to rotate in the first direction (e.g., the same direction of arrow direction D1), such that the first reversing baffle 522 comes into contact with the first surface 516c of the intermediate gear 516, and the intermediate gear 516 moves toward the first intermediate gear position. In these embodiments, upon rotation of the reversing gear 521, the intermediate gear 516 may remain in the first intermediate gear position for a period of time(thereby moving to the first retaining portion 522b of the first reversing baffle 522). At this time, the first reversing teeth 516a of the intermediate gear 516 contact and engage with the first gear 511 to drive the first gear 511 to rotate in the same direction as the reversing gear 521 (e.g., in the first direction D1), which in turn drives the third gear 513 to rotate reversely (e.g., in an opposite direction of the first direction) and causes the fourth gear 514 on the axle 530 to rotate, thereby engaging with the third gear 513, to rotate in the first direction D1, thereby realizing movement of the wheels and thus the pool cleaning device in the first direction D 1.

In contrast, when the transmission unit is in the second state, as shown in FIGS. 8 and 9, the reversing gear 521 is driven to rotate in the the first direction D1. However, in these embodiments, the rotation of the reversing gear 521 may causes the second reversing baffle 523to come into contact with the second surface 516d of the intermediate gear 516, such that the intermediate gear 516 moves toward the second intermediate gear position and stays in the second intermediate gear position for a period of time after moving in place (moving to the second retaining portion 523b of the second reversing baffle 523). At this time, the second reversing teeth 516b of the intermediate gear 516 may contact and engage with the second gear 512 to drive the second gear 512 to rotate in the same direction as the reversing gear 521, which in turn drives the fifth gear 515 on the axle 530, engaging with the second gear 512, to rotate in the opposite second direction D2, thereby realizing movement of the wheels and thus the pool cleaning device in the second direction D2.

In view of the foregoing, it should be appreciated that the pool cleaning device described herein may automatically realize a constant change in the direction of movement (e.g., between the first direction and the second direction). When the pool cleaning device is connected to an external pump body by means of a pipeline, for example, a corrugated pipe, the corrugated pipe may be knotted, which affects the use. Therefore, in the embodiment shown in FIGS. 2 and 3, an adapter 600 may be provided at the external connection port 140 of the pool cleaning device to connect a water intake end of the external pump body. Advantageously, the adapter 600 may include a connecting sleeve 610. The connecting sleeve 610 may be connected to the external connection port 140 via a bearing 630, so as to be able to rotate relative to the external connection port 140 and to avoid knotting of for example a corrugated pipe connected to the water intake end of the external pump body.

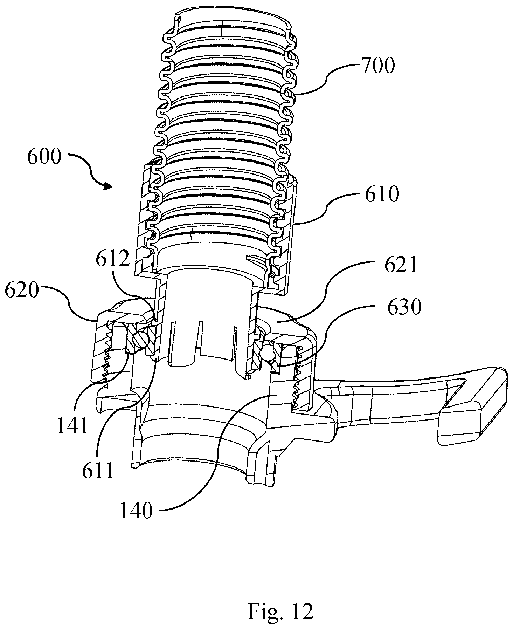

In some embodiments, as shown in FIG. 12, the adapter 600 may connect the external connection port 140 to a corrugated pipe 700. In these embodiments, one end of the connecting sleeve 610 may be provided with a snap hook 611, and the adapter 600 may further include a connecting nut 620, with the connecting nut 620 being provided with a radially extending limiting portion 621, such that the rotation of the bearing 630 can be limited between the snap hook 611 and the limiting portion 621.

In some embodiments, the connecting sleeve 610 may further include a peripheral flange 612 spaced apart from the snap hook 611, so that the bearing 630 can be limited between the snap hook 611 and the peripheral flange 612, and between the limiting portion 621 and the peripheral flange.

In some embodiments, an inner wall of the external connection port 140 may be provided with a step 141, so that rotation of the bearing 630 can be limited between the snap hook 611 and the step 141, and between the limiting portion 621 and the peripheral flange 612.

Owing to the design of the present disclosure, the pool cleaning device can automatically and reliably change a path under the synergistic action of the gear assembly and the reversing assembly in the transmission unit, thereby realizing a constant change of the direction of movement at the bottom of the pool, so that the pool cleaning device may not spin in the same place, and the bottom of the pool can be cleaned in all directions with a high cleaning efficiency. In addition, the adapter is designed to prevent the corrugated pipe from getting knotted while the pool cleaning device changes the direction of movement, making the process of use safer and more effective.

It should be understood that the embodiments as shown in the drawings only show the optional shapes, sizes and arrangements of optional components of the pool cleaning device according to the present disclosure, which are merely illustrative but not restrictive, and other shapes, sizes and arrangements may be employed without departing from the idea and scope of the present disclosure.

The technical contents and technical features of the present disclosure are disclosed above, but it can be understood that those skilled in the art would have made various variations and improvements to the concepts disclosed above under the creative idea of the present disclosure, and all the variations and improvements fall into the scope of protection of the present disclosure. The descriptions of the above embodiments are illustrative but not restrictive, and the scope of protection of the present disclosure is determined by the claims.

## Claims

1. A pool cleaning device, comprising:
a driving unit (400) configured to drive the pool cleaning device; and
a transmission unit (500) comprising a gear assembly (510) and a reversing assembly (520) linked with the gear assembly (510), the transmission unit (500) being configured to be driven by the driving unit (400) to switch between a first state and a second state;
wherein, in the first state, the gear assembly (510) is in a first position in which the pool cleaning device moves in a first direction and, in the second state, the gear assembly (510) is switched to a second position in which the pool cleaning device moves in a second direction opposite to the first direction.

2. The pool cleaning device according to claim 1, wherein in both the first state and the second state, the gear assembly (510) is linked with the reversing assembly (520).

3. The pool cleaning device according to claim 1 or 2, wherein the gear assembly (510) comprises a first gear (511) and a second gear (512) that are coaxially arranged and an intermediate gear (516) to drive the first gear (511) and the second gear (512).

4. The pool cleaning device according to any of the preceding claims, wherein the first gear (511) engages with a fourth gear (514) via a third gear (513) and the second gear (512) engages with a fifth gear (515), with the fourth gear (514) and the fifth gear (515) coaxially arranged.

5. The pool cleaning device according to claim 3 or 4, wherein the intermediate gear (516) is coaxially arranged between the first gear (511) and the second gear (512), and the intermediate gear (516) comprises first reversing teeth (516a) arranged toward the first gear (511) and second reversing teeth (516b) arranged toward the second gear (512), such that the first reversing teeth (516a) engage with the first gear (511) in the first position, and the second reversing teeth (516b)engage with the second gear (512) in the second position.

6. The pool cleaning device according to any of the preceding claims from 3 to 5, wherein the reversing assembly (520) comprises a reversing gear (521), and a first reversing baffle (522) and a second reversing baffle (523) that are coaxially arranged, the reversing gear (521) being rotatable such that:
the intermediate gear (516) translates to the first position when the first reversing baffle (522) engages with a first surface (516c) of the intermediate gear (516), and the intermediate gear (516) translates to the second position when the second reversing baffle (523) engages with a second surface (516d) of the intermediate gear (516) opposite to the first surface (516c).

7. The pool cleaning device according to claim 6, wherein the reversing assembly (520) comprises a first reversing base plate (524) and a second reversing base plate (525) that are coaxially arranged and parallel to each other, the first reversing baffle (522) being configured to extend from a periphery of the first reversing base plate (524) and the second reversing baffle (523) being configured to extend from a periphery of the second reversing base plate (525), such that the first reversing base plate (524) and the second reversing base plate (525) extend perpendicularly toward each other and are arranged in axial symmetry with respect to each other.

8. The pool cleaning device according to claim 7, wherein the first reversing baffle (522) and the second reversing baffle (523) are each configured to comprise a guiding portion (522a, 523a) for guiding the intermediate gear (516) and a retaining portion (522b, 523b) for retaining the intermediate gear (516).

9. The pool cleaning device according to any of the preceding claims from 6 to 8, wherein the gear assembly (510) further comprises a sixth gear (517) engaging with the intermediate gear (516) and a seventh gear (518) engaging with the reversing gear (521), the sixth gear (517) and the seventh gear (518) being coaxially arranged.

10. The pool cleaning device according to any of the preceding claims, wherein the driving unit (400) comprises an impeller (430) and a driving housing for accommodating the impeller (430), the driving housing being provided with a water intake port (450) and a water exhaust port (460) which are in fluid communication with a dirt suction port (160) and an external connection port (140) of the pool cleaning device.

11. The pool cleaning device according to claim 10, wherein a filter chamber (171) is arranged between the dirt suction port (160) and the water intake port (450), and the filter chamber (171) is provided with a first filter screen (172) arranged adjacent to the dirt suction port (160).

12. The pool cleaning device according to claim 11, wherein the filter chamber (171) further comprises a second filter screen (173) arranged adjacent to the water intake port (450).

13. The pool cleaning device according to any of the preceding claims, wherein an external connection port (140) of the pool cleaning device is provided with an adapter (600) to connect a water intake end of an external pump body, the adapter (600) comprising a connecting sleeve (610), and the connecting sleeve (610) being connected to the external connection port (140) by a bearing (630), such that the connecting sleeve (610) rotates relative to the external connection port (140).

14. The pool cleaning device according to claim 13, wherein at least one end of the connecting sleeve (610) is provided with a snap hook (611), and the adapter (600) further comprises a connecting nut (620), the connecting nut (620) being provided with a radially extending limiting portion (621), and rotation of the bearing (630) is limited between the snap hook (611) and the limiting portion (621).

15. The pool cleaning device according to claim 14, wherein the connecting sleeve (610) further comprises a peripheral flange (612) spaced apart from the snap hook (611), and rotation of the bearing (630) is limited between the snap hook (611) and the peripheral flange (612), and between the limiting portion (621) and the peripheral flange (612).

16. The pool cleaning device according to claim 15, wherein an inner wall of the external connection port (140) is provided with a step (141), and rotation of the bearing (630) is limited between the snap hook (611) and the step (141), and between the limiting portion (621) and the peripheral flange (612).
